# EUROPÄISCHE PATENTSCHRIFT

(11) **EP 0 807 791 B1**
(45) Veröffentlichungstag und Bekanntmachung des Hinweises auf die Patenterteilung: **11.06.2003**
(21) Anmeldenummer: 97102020.1
(22) Anmeldetag: 08.02.1997
(51) Int. Cl.: F24F 12/00, F24D 19/06, F24F 13/18

(54) **Lüftungssystem für die Räume von Gebäuden**
Ventilation system for the rooms of a building
Système de ventilation pour les pièces d'un bâtiment

(30) Priorität: 18.05.1996 DE 19620130
(43) Veröffentlichungstag der Anmeldung: 19.11.1997
(73) Patentinhaber: FassadenSystemLüftung GmbH & Co. KG, 68199 Mannheim (DE)
(72) Erfinder: Bauer, Gerhard, 67067 Ludwigshafen (DE); Gebhardt, Hans G., 64297 Darmstadt (DE); Ormai, Josef, 68305 Mannheim (DE)
(74) Vertreter: DR. STARK & PARTNER

(56) Entgegenhaltungen:
- DE-A- 3 030 536
- DE-A- 3 300 077
- DE-A- 3 732 545
- DE-A- 4 204 772
- GB-A- 191 106 791

## Beschreibung

Die Erfindung bezieht sich auf ein Lüftungssystem für die Räume von Gebäuden, bei dem im Brüstungsbereich unter einem Fenster ein Lüftungsgerät mit wenigstens einem Zuluftgebläse, das mit einer raumaußenseitigen Luftansaugöffnung und einer rauminnenseitig ausmündenden Lufteinlaßöffnung in Strömungsverbindung steht, und unter dem Lüftungsgerät ein Wärmetauscher angeordnet sind.

Aus der EP 0 658 729 A1 ist bereits ein für die Räume von Gebäuden bestimmtes Lüftungssystem bekannt, das ein im Brüstungsbereich unter einem Fenster angeordnetes Lüftungsgerät mit je einem Gebläse zum Zuführen von Frischluft und zum Abführen von Raumluft umfaßt. Unter dem Lüftungsgerät ist ein Radiator angeordnet, der in herkömmlicher Weise als Raumheizung betreibbar, im Bedarfsfalle aber auch mit einem Kühlmedium beaufschlagbar ist und beim Zuführen von Frischluft zu dem Raum von der Frischluft bestrichen wird.

Angesichts des Bestreichens des wahlweise als Heizkörper oder auch als Kühlelement betreibbaren Radiators mit der dem Raum zugeführten Luft kann diese im Bedarfsfalle aufgewärmt oder aber heruntergekühlt werden.

Bei einem weiteren Lüftungssystem nach der DE-A-4204 772 ist die Lufteinlaßöffnung auf den Wärmetauscher gerichtet.

Aufgabe der vorliegenden Erfindung ist es, das letztgenannte Lüftungssystem hinsichtlich seiner Effizienz weiterzuentwickeln und zu verbessern.

Gelöst ist diese Aufgabe dadurch, daß bei dem im Oberbegriff des Patentanspruchs 1 angegebenen Lüftungssystem dem Lüftungsgerät rauminnenseitig eine Verblendung zugeordnet ist, die bis über den Wärmetauscher reicht und diesen zum Raum hin zumindest teilweise abdeckt sowie einen Strömungsweg für eine über den Wärmetauscher geführte Luftströmung bildet, der in seinem oberen Bereich gegen das Abströmen vom Wärmetauscher infolge Konvektion aufsteigender Warmluft absperrbar ist.

Bei der Erfindung handelt es sich somit darum, daß für die vom Lüftungsgerät zugeführte und rauminnenseitig austretende Frischluft eine Zwangsführung dergestalt geschaffen ist, daß die aus dem Lüftungsgerät austretende Frischluft über den Wärmetauscher strömt und erst danach bodennah in den zu belüftenden Raum eintritt. In Abhängigkeit davon, ob der Wärmetauscher als Heizkörper oder als Kühlelement betrieben wird, erfährt dadurch die zugeführte Luft eine wirksame Erwärmung oder Abkühlung.

Wenn der Wärmetauscher als Heizkörper betrieben wird, ist bei dem erfindungsgemäßen Lüftungssystem auch eine Betriebsweise in der Form möglich, daß unbeschadet eines über den Wärmetauscher geführten Zuluftstroms ein Konvektionsstrom aufsteigt, der durch oberseitige Auslaßöffnungen des genannten Strömungsweges in den Raum eintritt. Es handelt sich bei dieser Betriebsweise um einen gemischten Betrieb, bei dem Zuluft erwärmt und nach unten aus dem Wärmetauscher austretend in den Raum eingeleitet wird, während gleichzeitig ein aufsteigender Konvektionsstrom durch oberseitige Öffnungen der Verblendung in den Raum eintritt.

Für die vorstehend erörterte Betriebsweise hat sich als vorteilhaft erwiesen, wenn die Lufteinlaßöffnung des Lüftungsgeräts über dem brüstungsnahen Teil des Wärmetauschers ausmündet und etwa über dessen halbe Tiefe reicht. Bei einer derartigen Anordnung gelingt eine weitgehende Trennung der brüstungsnah über den Wärmetauscher zugeführten Frischluft und einer von den übrigen Teilen des Wärmetauschers aufsteigenden Konvektionsströmung.

Bei abgeschaltetem Lüftungsgerät und dem Betrieb des Wärmetauschers als Heizkörper wirkt dieser im konventioneller Weise, indem ein Konvektionsstrom aufsteigt und durch oberseitige Auslaßöffnungen der Verblendung in den Raum eintritt.

Der Sinn des neuartigen Lüftungssystems besteht darin, daß dieses System wahlweise mit Kühlung und Erwärmung der zugeführten Frischluft betrieben werden kann, wobei es keines zusätzlichen Umluftgebläses bedarf. Das erfindungsgemäße Lüftungssystem ist mithin im Aufbau einfach und kostengünstig.

Ein besonders einfacher Aufbau des Lüftungssystems gelingt, wenn die Varblendung bis zu einer oberseitigen Abdeckung des Lüftungsgerätes reicht, etwa zu einer das Lüftungsgerät abdeckenden Fensterbank.

Eine andere Weiterbildung sieht indessen vor, daß die Verblendung aus einem Lüftungsgitter, das eine sich rauminnenseitig an einen Strömungskanal mit der nach unten gerichteten Lufteinlaßöffnung anschließende Vorsatzkammer bildet, und aus einer sich von dem Lüftungsgitter abwärts erstreckenden und etwa bis zur Unterkante des beabstandet vom Raumboden installierten Wärmetauschers reichende Verkleidung gebildet ist. Eine derartige Vorsatzkammer kann Teil des Gehäuses des Lüftungsgerätes oder auch an das Gerät angefügt sein. Im letztgenannten Fall gelingt in einfacher Weise ein nachträgliches Umrüsten eines herkömmlichen Lüftungssystems in ein System zur Klimatisierung.

Bei dem erfindungsgemäßen Lüftungssystem kommt es darauf an, daß der von der Verblendung gebildete Strömungsweg oberseitig wahlweise absperr- und freigebbar ist. Als Absperrorgan kann dabei eine zwischen einer Offenstellung und einer Schließlage verschwenkbare Klappe dienen, die beispielsweise die Vorsatzkammer unterseitig absperren kann.

Eine andere Weiterbildung sieht vor, daß der von der Verblendung gebildete Strömungsweg oberseitig mit einem einstellbaren Lamellengitter versehen ist, das in der Offenstellung ein Abströmen einer vom Wärmetauscher aufsteigenden Konvektionsströmung in den Raum ermöglicht, aber andererseits oberseitig den von der Verblendung gebildeten Strömungsweg zum Raum hin vollständig abzuschließen vermag.

Anhand der beigefügten Zeichnung sollen nachstehend einige Ausführungsbeispiele des erfindungsgemäßen Lüftungssystems erläutert werden. In schematischen Ansichten zeigen:
- Fig. 1: einen Vertikalschnitt durch einen Fenster-Brüstungsbereich eines Raumes mit einem unter dem Fenster aufgenommenen Lüftungsgerät und einem unter diesem rauminnenseitig angeordneten Heizkörper,
- Fig. 2: in einer Ansicht wie in Fig. 1 einen Ausschnitt aus einem mit einer rauminnenseitigen Vorsatzkammer ausgerüsteten Lüftungsgerät,
- Fig. 3: eine andere zu der Ausführungsform nach Fig. 1 alternative Ausbildung des Lüftungssystems und
- Fig. 4: eine weitere Alternative des Lüftungssystems.

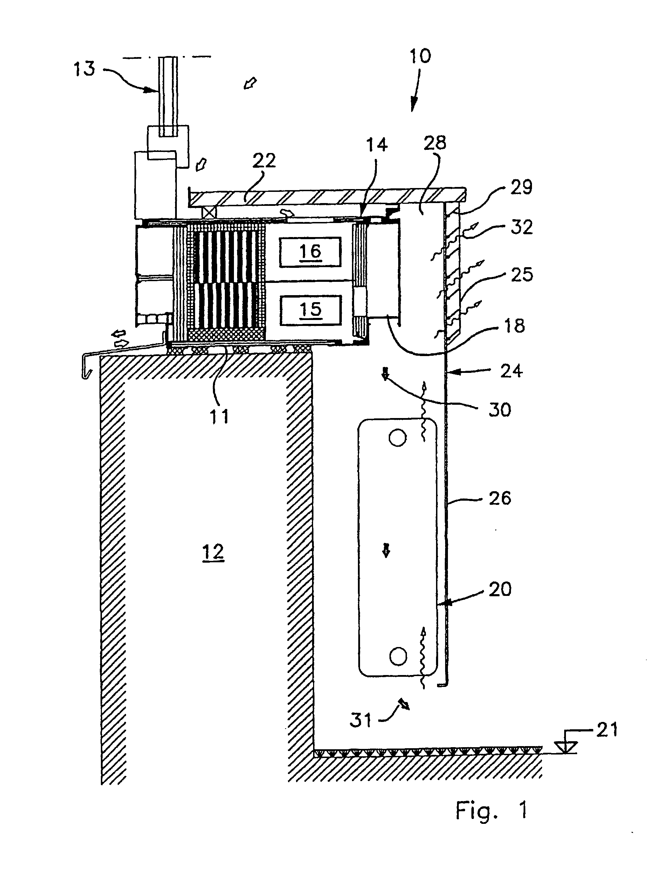

Bei dem in Fig. 1 veranschaulichten Lüftungssystem 10 ist in einer Ausnehmung 11 einer Brüstung 12 unter einem nur angedeuteten Fenster 13 ein Lüftungsgerät 14 mit je einer Zuluft- und Fortluftsektion 15, 16 aufgenommen. Die Zuluftsektion 15 umfaßt ein nicht weiter dargestelltes Gebläse, das mit einer ebenfalls nicht dargestellten raumaußenseitigen Luftansaugöffnung und einer rauminnenseitig ausmündenden Lufteinlaßöffnung 18 in Strömungsverbindung steht.

Die rauminnenseitige Lufteinlaßöffnung 18 des Lüftungsgerätes 14 ist nach unten gerichtet und unter dem in den Raum vorstehenden Lüftungsgerät befindet sich ein Wärmetauscher 20 in Gestalt eines Radiators, der beabstandet vom Boden 21 eines Raumes angeordnet und auf den die nach unten weisende Lufteintrittsöffnung 18 des Lüftungsgerätes gerichtet ist.

Oberseitig ist das Lüftungsgerät 10 mittels einer Fensterbank 22 abgedeckt, die rauminnenseitig über das Lüftungsgerät vorsteht. Dem Lüftungsgerät 10 ist rauminnenseitig eine Verblendung 24 zugeordnet, die aus einem unterseitig bis an die Fensterbank 22 heranreichenden Lüftungsgitter 25 und einer sich unterseitig vom Lüftungsgitter 25 abwärts erstreckenden und etwa bis zur Unterkante des Wärmetauschers 20 reichenden Verkleidung 26 besteht. Das Lüftungsgitter 25 ist beabstandet von dem rauminnenseitigen Ende des Lüftungsgerätes 14 angeordnet, so daß sich hinter dem Lüftungsgerät 14 eine rauminnenseitige Kammer 28 bildet, und mit zwischen einer Schließ- und einer Öffnungslage verstellbaren Lamellen 29 ausgerüstet.

Wenn mittels des Gebläses der Zuluftsektion 15 des Lüftungsgerätes 14 dem Raum von außen angesaugte Frischluft zugeführt wird, tritt diese durch die unterseitige Lufteinlaßöffnung 18 des Lüftungsgerätes 14 aus und beaufschlagt den unter der Lufteinlaßöffnung 18 angeordneten Wärmetauscher 20, wie der Pfeil 30 andeutet. Sofern der Wärmetauscher 20 als Heizkörper betrieben wird, erfährt dar über diesen geleitete Frischluftstrom eine Erwärmung und tritt dann gemäß Pfeil 31 unter der Verkleidung 26 der Verblendung 24 hindurchströmend in den Raum ein.

Der Wärmetauscher 20 kann im Bedarfsfalle auch als Kühlelement betrieben werden mit der Folge, daß dann mittels des Gebläses der Zuluftsektion 15 des Lüftungsgerätes 14 geförderte und durch die Lufteinlaßöffnung 18 gemäß Pfeil 30 zugeführte Frischluft beim Bestreichen des Wärmetauschers 20 eine Abkühlung erfährt.

Wenn mittels des Gebläses der Zuluftsektion 15 des Lüftungsgerätes 14 keine Frischluft angesaugt und der Wärmetauscher 20 als Heizkörper betrieben wird, gelingt eine konventionelle Raumheizung, indem unter der bis zur Unterkante des Wärmetauschers 20 reichenden Verkleidung 26 der Verblendung 24 zuströmende Raumluft infolge Erwärmung im Bereich des Wärmetauschers 20 als Konvektionsstrom durch die dann in Offenstellung befindlichen Lamellen 29 des Luftleitgitters 25 in den Raum eintritt. Dies deuten die aufsteigenden Pfeile 32 in Fig. 1 an.

Schließlich ist auch ein Mischbetrieb in der Weise möglich, daß bei als Heizkörper betriebenem Wärmetauscher 20 einerseits zugeführte Frischluft erwärmt wird und andererseits ein aufsteigender Konvektionsstrom zwischen den dann in Offenstellung befindlichen Lamellen 29 des Luftleitgitters 25 hindurch in den Raum eintritt, wie dies Fig. 1 zeigt. Dabei hat sich als vorteilhaft erwiesen, wenn die nach unten gerichtete Lufteinlaßöffnung 18 des Lüftungsgerätes 14 sich über dem brüstungsnahen Teil des Wärmetauschers 20 befindet und etwa bis zur halben Tiefe des Wärmetauschers 20 reicht. Dadurch gelingt eine gewisse Trennung der zugeführten Frischluft und des in dem von der Brüstung 12 abgewandten Teil des Wärmetauschers 20 aufsteigenden Konvektionsstroms.

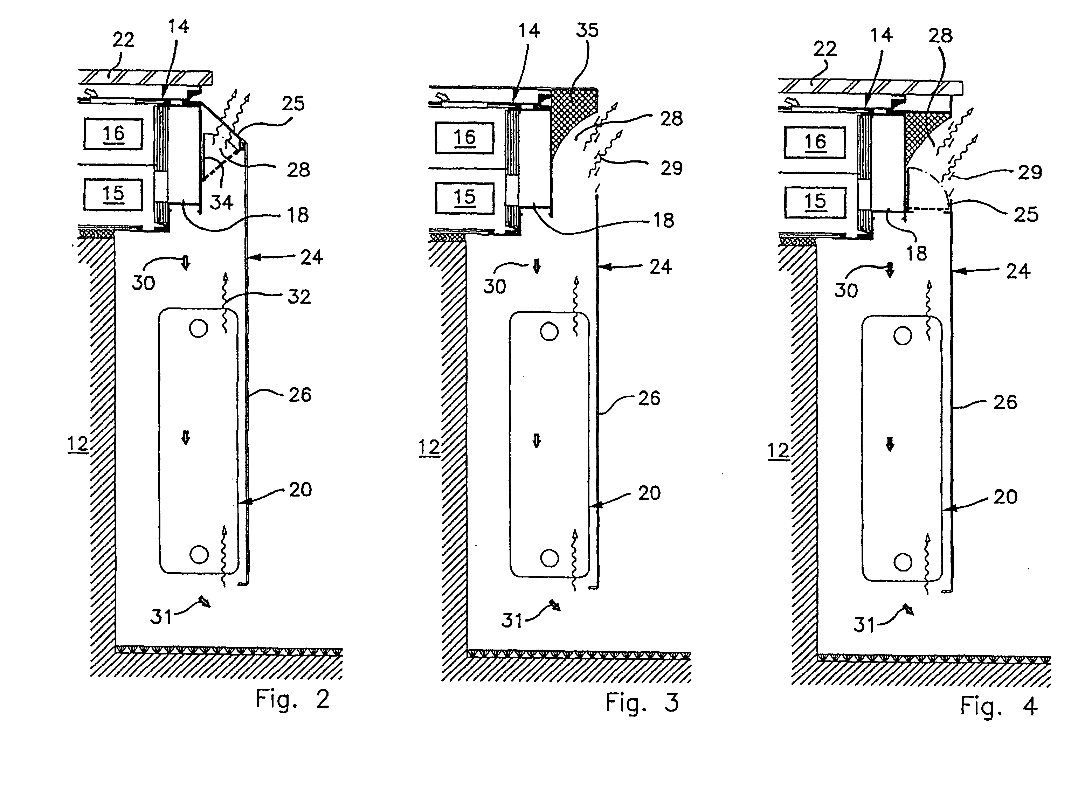

Auch bai der Ausführungsform gemäß Fig. 2 ist das Lüftungsgerät 14 zwischen einem nicht weiter dargestellten Fenster und einer Brüstung 12 in einer Ausnehmung aufgenommen sowie oberseitig mittels einer Fensterbank 22 abgedeckt, die jedoch nur etwa bis zum raumseitigen Ende des Lüftungsgerätes 14 reicht. Oberseitig ist zwischen der Fensterbank 22 und dem Lüftungsgerät 14 an dieses eine schräg abwärts in den Raum vorstehende und mit oberseitigen Luftdurchtrittsöffnungen versehene Begrenzung 25 angeschlossen, an die sich eine bis etwa zur Unterkante des Wärmetauschers 20 reichende Verkleidung 26 anschließt. Dadurch ist wiederum raumseitig an das Lüftungsgerät 14 anschließend eine Vorsatzkammer 28 gebildet, die mittels einer rückseitig am Lüftungsgerät schwenkbar angelenkten Absperrklappe nach unten zu dem Wärmetauscher 20 hin absperrbar bzw. mit dem vom Wärmetauscher 20 aufsteigenden Strömungsweg verbindbar ist.

Auch bei dieser Ausführungsform trifft vom Gebläse der Zuluftsektion 15 des Lüftungsgerätes 14 über die Lufteinlaßöffnung 18 zugeführte Frischluft auf die brüstungsnahen Bereiche des Wärmetauschers 20 und tritt im erwärmten Zustand dann gemäß Pfeil 31 unter der Verkleidung 26 hindurch in den Raum ein. In Abhängigkeit vom Betrieb des Wärmetauschers 20 als Heiz- oder Kühlkörper erfährt dabei die zugeführte Frischluft eine Erwärmung oder Abkühlung. Gleichfalls in Übereinstimmung mit der Ausführungsform nach Fig. 1 kann in den von der Brüstung 12 abgewandten Bereichen des Wärmetauschers unter der Verkleidung zuströmende Raumluft als Konvektionsstrom aufsteigen und bei in Offenstellung befindlicher Absperrklappe 34 durch die Luftdurchtrittsöffnungen der schräg verlaufenden Abdeckung 25 in den Raum eintreten.

Die in Fig. 3 veranschaulichte Ausführungsform unterscheidet sich von den vorstehend beschriebenen Ausführungsformen nach den Fig. 1 und 2 nur dadurch, daß die Verblendung 24 aus einer sich etwa von der Unterkante des Wärmetauschers 20 nach oben forterstrecken und dann oberseitig an das Lüftungsgerät 14 angeschlossenen Verkleidung besteht, wobei der obere Teil dieser Verkleidung mit einem Luftleitelement 35 ausgerüstet ist und eine Vorsatzkammer 28 bildet, die über ein von den Lamellen 29, die zwischen einer Schließ- und einer Öffnungsstellung betätigbar sind, gebildetes Leitgitter mit dem Raum in Verbindung steht, diesem gegenüber im Bedarfsfalle aber auch absperrbar ist.

Bei der Ausführungsform nach Fig. 4 hingegen ist die Vorsatzkammer 28 Bestandteil des Gehäuses des Lüftungsgerätes, Die zum Raum hinweisende Wand dieser Vorsatzkammer ist durchbrochen und mit einem Lüftungsgitter in Form einstellbarer Lamellen 29 versehen und die Vorsatzkammer mit dem zu belüftenden Raum verbinden oder von diesem abschließen. Auf der zum Wärmetauscher 20 hinweisenden Unterseite ist der Vorsatzkammer 28 wieder eine um eine Anlenkachse zwischen einer Schließ- und Öffnungsstellung betätigbare Absperrklappe 34 zugeordnet, mittels der in gleicher Weise wie bei der Ausführungsform nach Fig. 2 ein aufsteigender Konvektionsstrom zum Abströmen in den zu belüftenden Raum freigegeben oder aber die Vorsatzkammer 28 verschlossen werden kann, so daß dann, in Abhängigkeit vom Betrieb des Wärmetauschers 20 als Heiz- oder Kühlkörper, von außen zugeführte Frischluft im erwärmten oder gekühlten Zustand in den Raum eingeleitet wird.

## Patentansprüche

1. Lüftungssystem für die Räume von Gebäuden, bei dem im Brüstungsbereich unter einem Fenster ein Lüftungsgerät mit wenigstens einem Zuluftgebläse, das mit einer raumaußenseitigen Luftansaugöffnung und einer rauminnenseitig ausmündenden Lufteinlaßöffnung in Strömungsverbindung steht, und unter dem Lüftungsgerät ein Wärmetauscher angeordnet sind, wobei die Lufteinlaßöffnung auf den Wärmetauscher gerichtet ist,
**dadurch gekennzeichnet,**
**daß** dem Lüftungsgerät (14) rauminnenseitig eine Verblendung (24) zugeordnet ist, die bis über den Wärmetauscher (20) reicht und diesen zum Raum hin zumindest teilweise abdeckt sowie einen Strömungsweg für eine über den Wärmetauscher (20) geführte Luftströmung bildet, der in seinem oberen Bereich gegen das Abströmen von vom Wärmetauscher infolge Konvektion aufsteigender Warmluft absperrbar ist.

2. Lüftungssystem nach Anspruch 1, **dadurch gekennzeichnet, daß** die Lufteinlaßöffnung (18) über dem brüstungsnahen Teil des Wärmetauschers (20) ausmündet und etwa über dessen halbe Tiefe reicht.

3. Lüftungssystem nach Anspruch 1 oder 2, **dadurch gekennzeichnet, daß** die Verblendung (24) bis zu einer oberseitigen Abdeckung (22) des Lüftungsgerätes (14), etwa einer Fensterbank, reicht.

4. Lüftungssystem nach einem der Ansprüche 1 bis 3,
**dadurch gekennzeichnet, daß** die Verblendung (24) aus einem Lüftungsgitter (25), das eine sich rauminnenseitig an einen Strömungskanal mit der nach unten gerichteten Lufteinlaßöffnung (18) anschließende Vorsatzkammer (28) bildet, und aus einer von dem Lüftungsgitter (25) abwärts erstreckenden und etwa bis zur Unterkante des beabstandet vom Raumboden (21) installierten Wärmetauschers (20) reichenden Verkleidung (26) gebildet ist.

5. Lüftungssystem nach einem der Ansprüche 1 bis 4, **dadurch gekennzeichnet, daß** der von der Verblendung (24) gebildete Strömungsweg oberseitig mittels einer zwischen einer Offenstellung und einer Schließlage verschwenkbaren Klappe (34) absperrbar ist.

6. Lüftungssystem nach einem der Ansprüche 1 bis 4, **dadurch gekennzeichnet, daß** der von der Verblendung (24) gebildete Strömungsweg oberseitig mit einem einstellbaren Lamellengitter (29) versehen ist.

## Claims

1. Ventilation system for the rooms of buildings, wherein a ventilator is disposed in the breast region beneath a window and has at least one air supply fan, which is in flow connection with an air intake opening to the exterior of the room and with an air inlet opening which discharges air to the interior of the room, and a heat exchanger is disposed beneath the ventilator, the air inlet opening being orientated towards the heat exchanger, **characterised in that** the ventilator (14) has associated therewith, on the side facing the interior of the room, a facing (24) which extends beyond the heat exchanger (20) and covers said exchanger at least partially in the direction of the room, said facing also forming a flow path for an air flow, which is guided over the heat exchanger (20), said path, in its upper region, being able to be closed so that hot air, rising from the heat exchanger as a consequence of convection, does not flow-away.

2. Ventilation system according to claim 1, **characterised in that** the air inlet opening (18) discharges air over the part of the heat exchanger (20) close to the breast and extends substantially over half the depth of said exchanger.

3. Ventilation system according to claim 1 or 2, **characterised in that** the facing (24) extends to a top cover (22) of the ventilator (14), possibly a windowsill.

4. Ventilation system according to one of claims 1 to 3, **characterised in that** the facing (24) is formed from a ventilation lattice (25), which forms an additional chamber (28) communicating, on the side facing the interior of the room, with a flow duct having the downwardly orientated air inlet opening (18), and from a covering (26), which extends downwardly from the ventilation lattice (25) and reaches substantially as far as the lower edge of the heat exchanger (20), which is installed at a spacing from the floor (21) of the room.

5. Ventilation system according to one of claims 1 to 4, **characterised in that** the flow path, formed by the facing (24), can be closed at the top by means of a flap (34), which is pivotable between an open position and a closed position.

6. Ventilation system according to one of claims 1 to 4, **characterised in that** the flow path, formed by the facing (24), is provided at the top with an adjustable laminar lattice (29).

## Revendications

1. Système de ventilation pour les pièces d'un bâtiment, dans lequel, dans la zone d'appui qui est situé au-dessous d'une fenêtre, sont placés un appareil de ventilation comportant au moins un ventilateur d'amenée d'air qui communique avec une ouverture d'aspiration d'air située à l'extérieur de la pièce et une ouverture d'entrée d'air débouchant à l'intérieur de la pièce et, sous l'appareil de ventilation, un échangeur thermique, sachant que l'ouverture d'entrée d'air est dirigée vers l'échangeur thermique, **caractérisé en ce que**, à l'intérieur de la pièce, un parement (24) est associé à l'appareil de ventilation (14), qui s'étend jusqu'au-delà de l'échangeur thermique (20) et recouvre ce dernier au moins en partie du côté tourné vers la pièce et qui forme une voie d'écoulement pour un flux d'air passant sur l'échangeur thermique (20), laquelle voie peut être barrée dans sa partie supérieure pour éviter que de l'air chaud se dégageant de l'échangeur thermique vers le haut du fait de la convection ne s'échappe.

2. Système de ventilation selon la revendication 1, **caractérisé en ce que** l'ouverture d'entrée d'air (18) débouche au-dessus de la partie de l'échangeur thermique (20) qui est proche de l'appui de fenêtre et s'étend approximativement sur la moitié de sa profondeur.

3. Système de ventilation selon la revendication 1 ou 2, **caractérisé en ce que** le parement (24) s'étend jusqu'à un recouvrement supérieur (22) de l'appareil de ventilation (14), par exemple une banquette de fenêtre.

4. Système de ventilation selon l'une des revendications 1 à 3, **caractérisé en ce que** le parement (24) est constitué par une grille de ventilation (25) qui forme une chambre additionnelle (28) faisant suite à l'intérieur de la pièce à un conduit d'écoulement présentant l'ouverture d'entrée d'air (18) qui est dirigée vers le bas, et par un habillage (26) s'étendant de la grille de ventilation (25) vers le bas et environ jusqu'à l'arête inférieure de l'échangeur thermique (20) installé au-dessus du sol (21) de la pièce.

5. Système de ventilation selon l'une des revendications 1 à 4, **caractérisé en ce que** la voie d'écoulement formée par le parement (24) peut être fermée à sa partie supérieure par un volet (34) pouvant pivoter entre une position ouverte et une position fermée.

6. Système de ventilation selon l'une des revendications 1 à 4, **caractérisé en ce que** la voie d'écoulement formée par le parement (24) est munie à sa partie supérieure d'une grille à lamelles réglable (29).
